# EUROPÄISCHE PATENTSCHRIFT

(11) **EP 0 305 664 B1**
(45) Veröffentlichungstag und Bekanntmachung des Hinweises auf die Patenterteilung: **20.04.1994**
(21) Anmeldenummer: 88109586.3
(22) Anmeldetag: 16.06.1988
(51) Int. Cl.: B29C 65/18, B29C 65/26

(54) **Einrichtung zum Verschweissen von rohrförmigen Teilen aus thermoplastischem Material**
Apparatus for welding tubular thermoplastic elements together
Dispositif de soudage d'éléments tubulaires en matière thermoplastique

(30) Priorität: 28.08.1987 CH 3324/87
(43) Veröffentlichungstag der Anmeldung: 08.03.1989
(73) Patentinhaber: GEORG FISCHER AKTIENGESELLSCHAFT, CH-8201 Schaffhausen (CH)
(72) Erfinder: Kunz, Peter, CH-8200 Schaffhausen (CH)

(56) Entgegenhaltungen:
- EP-A- 0 020 915
- EP-A- 0 223 252
- EP-A- 0 284 834
- DE-A- 3 640 105
- DE-B- 2 830 722
- DE-C- 119 881
- GB-A- 1 549 169
- US-A- 2 662 550
- PATENT ABSTRACTS OF JAPAN, vol. 7, no. 215 (M-244)[1360], 22nd September 1983;& JP-A-58 108 108 (SEIBU PORIMA KASEI) 27-06-1983

## Beschreibung

Die Erfindung betrifft eine Einrichtung zum Verschweissen von rohrförmigen Teilen aus thermoplastischem Material, wie sie im Oberbegriff von Anspruch 1 gekennzeichnet ist.

Beim direkten Verschweissen von thermoplastischen Rohren bzw. rohrförmigen Teilen durch Erhitzung der zusammenstossenden Rohrenden an deren Aussenumfang mittels einer Heizvorrichtung, ensteht am Innenumfang dieser Teile eine Schweisswulst, welche den Durchflussquerschnitt verringert und den Strömungswiderstand erhöht, wobei dieser Wulst eine Gefahr für unerwünschte Ablagerungen wie Schmutz, Bakterien usw. darstellt. Durch die Möglichkeit des Abfliessens der Schmelze in den Innenraum kann sich auch kein genügender Schweissdruck aufbauen, so dass die Schweissverbindungen nicht immer den Erfordernissen auf Festigkeit und Dichtheit entsprechen.

Eine die Merkmale des Oberbegriffes aufweisende Einrichtung ist durch die EP-A-0 020 915 bekanntgeworden, wobei die an die Innenkontur der zu verschweissenden Teil andrückbare Blase mittels eines Druckmediums wie z.B. Wasser oder Luft aufweitbar ist. Nachteilig hierbei ist, dass für die meist zu Baustellen transportablen Einrichtungen zusätzlich ein Druckerzeuger wie z.B. ein Kompressor oder ein Druckwasser-Anschluss erforderlich ist.

Aufgabe der vorliegenden Erfindung ist die Schaffung einer Einrichtung der eingangs genannten Art, welche zum Aufweiten der Blase keine zusätzlichen Energiequellen benötigt, wobei trotzdem ein genügender Anpressdruck der Blase zur Verhinderung eines inneren Schweisswulstes und zum Aufbau eines ausreichenden Schweissdruckes erzeugbar ist.

Erfindungsgemäss wird dies durch die kennzeichnenden Merkmale von Anspruch 1 gelöst.

Besonders vorteilhafte Ausgestaltungen der Erfindung sind in den abängigen Ansprüchen gekennzeichnet.

Durch die Anordnung einer thermisch expandierenden Flüssigkeit, welche durch ein in der Blase angeordnetes elektrisches Heizelement aufgeheizt wird, kann die gleiche Stromquelle, wie sie für die Heizvorrichtung zur Erzeugung der erforderlichen Schmelztemperatur erforderlich ist, verwendet werden, wodurch die Einrichtung wesentlich vereinfacht wird.

Durch die US-A-2,662,550 ist zwar eine mittels einer thermisch expandieren Flüssigkeit aufweitbare Blase bekanntgeworden, doch bildet hierbei die Blase ein Absperrorgan in einer Rohrleitung zur Sperrung eines Mediumsdurchflusses. Die hier gezeigte Blase dient somit einem anderen Zweck und weist nicht die Gattungsmerkmale des Anmeldungsgegenstandes auf.

Die Erfindung ist anhand eines Ausführungsbeispieles in der beiliegenden Zeichnung vereinfacht dargestellt und nachfolgend beschrieben. Es zeigen:
Die einzige Figur zeigt eine Einrichtung zum Verschweissen rohrförmiger Teile im Längsschnitt teils mit einer nicht aufgeweiteten Blase vor dem Schweissvorgang und teils mit aufgeweiteter Blase während dem Schweissen.

Die gezeigte Schweisseinrichtung weist eine am Aussenumfang der beiden Enden der zu verschweissenden, thermoplastischen, rohrförmigen Teile 1a und 1b angeordnete Heizvorrichtung 2 und eine als Blase 4 ausgebildete, im Innenraum der rohrförmigen Teile 1a, 1b angeordnete Abstützvorrichtung 3 auf.

Die Heizvorrichtung 2 weist zwei die aneinanderstossenden rohrförmigen Teile 1a, 1b haltende Heizbacken 2a und 2b auf. Die Erhitzung der Heizbacken 2a, 2b erfolgt vorzugsweise durch elektrischen Strom, kann aber durch Heissluft oder durch eine erhitzte Flüssigkeit wie z.B. Oel erfolgen.

Die Abstützvorrichtung 3 weist eine aus hitzebeständigem Elastomer oder Silikon hergestellte aufweitbare Blase 4 auf, welche oval bzw. länglich ausgebildet ist und zwei abgerundete Enden 5, 6 und eine zylindrische Partie 7 aufweist.

Der Innenraum 8 der Blase weist ein elektrisches Heizelement 9 wie z.B. eine dargestellte Heizpatrone auf und ist mit einer thermisch expandierenden Flüssigkeit 10 wie z.B. Wasser oder synthetischem Oel gefüllt.

Das Heizelement 9 ist mittels Kabeln 12, mit einer weiter nicht dargestellten Stromquelle verbunden. Die an einem Ende 6 angeordneten Kabel 12 bilden gleichzeitig einen Zugstrang 11 zum Herausziehen der Blase 4 aus einer Rohrleitung. Z.B. könnte eine am Ende 6 angeordnete Bride 23 die Blase 4 beim Kabelanschluss nach aussen abdichten.

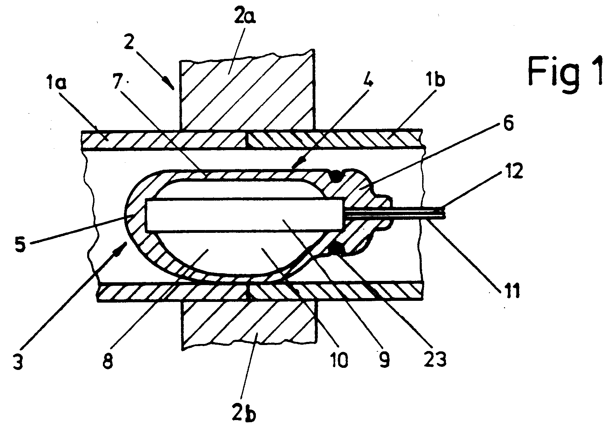

Vor dem Beginn der Schweissung wird die Blase 4 mittig an der zu verschweissenden Stelle angeordnet (s. Fig. 1 oben), wobei dann die Stromzufuhr zum Heizelement 9 der Blase 4 eingeschaltet wird.

Dabei dehnt sich die Blase 4, durch Volumenvergrösserung der Flüssigkeit bzw. Bildung von Dampf oder Gas derart aus, (s. Fig. 1 unten), dass diese mit der zylindrischen Partie 7 am Innenumfang der rohrförmigen Teile 1a, 1b mit einem einstellbaren Druck zum Anliegen kommt. Der Innendruck in der Blase sollte zwischen 0,5 bar und 5 bar durch Regelung der Stromzufuhr einstellbar sein. Dadurch wird während dem nachfolgenden Schweissvorgang mittels der aussen angeordneten Heizvorrichtung 2 der erforderliche Schweissdruck erzeugt, wobei gleichzeitig durch die feste Anlage am Innenumfang die Bildung von Schweisswülsten verhindert wird.

## Patentansprüche

1. Einrichtung zum Verschweissen von rohrförmigen Teilen aus thermoplastischem Material mit einer am Aussenumfang der rohrförmigen Teile in deren Stossbereich angeordneten Heizvorrichtung zur Erzeugung der erforderlichen Schmelztemperatur, und mit einer aufweitbaren und dabei gegen die Innenkontur der rohrförmigen Teile (1a, 1b) drückbaren Blase (4) welche im Bereich der Schweissverbindung angeordnet ist, dadurch gekennzeichnet, dass im Innenraum (8) der Blase (4) ein elektrisches Heizelement (9) wie z.B. eine Heizpatrone und eine thermisch expandierende Flüssigkeit (10) angeordnet ist, wobei das Heizelement mittels Kabeln (12) mit einer Stromquelle verbunden ist.

2. Einrichtung nach Anspruch 1, dadurch gekennzeichnet, dass die Blase (4) aus einem hitzebeständigen Elastomer oder Silikon besteht.

3. Einrichtung nach Anspruch 1 oder 2, dadurch gekennzeichnet, dass die Blase (4) länglich bzw. oval mit einer zylindrischen Partie (7) und abgerundeten Enden (5, 6) ausgebildet ist und an einem Ende (6) mit einem Zugstrang (11) versehen ist.

## Claims

1. Apparatus for welding together tubular elements of thermoplastic material, comprising a heating device arranged on the outer circumference of the tubular elements in their region of abutment and a bladder (4), arranged in the region of the weld joint, that can be widened out and thereby pressed against the internal contour of the tubular elements (1a, 1b), characterised in that an electrical heating element (9) such as, for example, a heating cartridge and a thermally expansible liquid (10) are arranged in the interior (8) of the bladder (4), the heating element being connected by cables (12) to a power source.

2. Apparatus according to claim 1, characterised in that the bladder (4) consists of a heat resistant elastomer or silicone.

3. Apparatus according to claim 1 or claim 2, characterised in that the bladder (4) has an elongated or oval shape with a cylindrical part (7) and rounded ends (5, 6) and is provided at one end (6) with a traction line (11).

## Revendications

1. Dispositif de soudage d'éléments tubulaires en matière thermoplastique, avec un dispositif de chauffage, situé sur la périphérie extérieure des parties tubulaires, dans leur zone de jonction, pour produire la température de fusion nécessaire, et avec une vessie (4), susceptible d'être pressée contre le contour intérieur des parties tubulaires (1a, 1b) et disposée dans la zone de la liaison par soudure, caractérisé en ce qu'un élément électrique chauffant (9), tel que par exemple une cartouche chauffante, et un liquide (10) susceptible de se dilater sous l'effet de la température sont disposés dans l'espace intérieur (8) de la vessie (4), l'élément chauffant étant relié à une source de courant au moyen de câbles (12).

2. Dispositif selon la revendication 1, caractérisé en ce que la vessie (4) est composée d'un élastomère résistant à la chaleur ou d'un silicone.

3. Dispositif selon la revendication 1 ou 2, caractérisé en ce que la vessie (4) présente une forme allongée, ou ovale, avec une partie cylindrique (7) et des extrémités (5, 6) arrondies et est pourvue à une extrémité (6) d'un brin de traction (11).
